# EUROPÄISCHE PATENTANMELDUNG

(11) **EP 4 435 939 A1**
(43) Veröffentlichungstag der Anmeldung: **25.09.2024**
(21) Anmeldenummer: 24159354.0
(22) Anmeldetag: 23.02.2024
(51) Int. Cl.: H01M 50/105, H01M 50/141, H01M 50/178, H01M 50/553

(54) **POUCH-BATTERIEZELLE MIT EINEM STARREN TERMINALELEMENT SOWIE VERFAHREN ZUR HERSTELLUNG EINER SOLCHEN POUCH-BATTERIEZELLE**

(30) Priorität: 21.03.2023 DE 102023202483
(71) Anmelder: VOLKSWAGEN AG, 38440 Wolfsburg (DE)
(72) Erfinder: Kwoczek, Lukas, 38102 Braunschweig (DE); Koch, Stephan Leonhard, 38154 Königslutter (DE)

(57) **Zusammenfassung**

Die Erfindung nennt eine Batteriezelle (1), umfassend eine Anordnung (2) an flächigen aktiven Schichtkomplexen (4), wobei jeder Schichtkomplex (4) eine Anodenschicht (An), eine Separatorschicht (S) und eine Kathodenschicht (K) aufweist, eine Rahmenanordnung (30), die ein starres Rahmenelement (8) aufweist, welches wenigstens eine erste Stirnseite (F1) der besagten Anordnung (2) an aktiven Schichtkomplexen (4) wenigstens teilweise überdeckt, und weiter wenigstens ein starres Terminalelement (10, 10')aufweist, welches bei besagter Stirnseite (F1) außenseitig am Rahmenelement (8) befestigt ist, und welches eine außenseitige Hauptfläche (17) aus einem elektrisch isolierenden Material aufweist, in die wenigstens ein flächenförmiger Anodenanschluss (20a) und/oder ein flächenförmiger Kathodenanschluss (20k) flächig eingefasst ist, und eine Pouch-Folie (32) aus einem biegsamen Material, welche am Terminalelement (10, 10') unter Umschluss der Anordnung (2) an aktiven Schichtkomplexen (4) und der Rahmenanordnung (30) fluiddicht derart befestigt ist, dass die Anordnung (2) an aktiven Schichtkomplexen (4) durch die Pouch-Folie (32) vor der Umwelt versiegelt ist, und die besagten Anschlüsse (20a, 20k) des Terminalelements (10) bzw. des jeweiligen Terminalelements (10, 10') von außen frei zugänglich bleiben, wobei eine elektrische Kontaktierung (12a) wenigstens einer der Anodenschichten (An) durch eine erste Rahmenöffnung (16) bei der ersten Stirnseite (F1) durchgeführt und mit dem Anodenanschluss (20a) elektrisch verbunden ist, und/oder wobei eine elektrische Kontaktierung (12k) wenigstens einer der Kathodenschichten (K) durch die erste Rahmenöffnung (16) oder durch eine zweite Rahmenöffnung bei der ersten Stirnseite (F1) durchgeführt und mit dem Kathodenanschluss (20k) elektrisch verbunden ist.

## Beschreibung

Die Erfindung betrifft eine Batteriezelle mit einer Anordnung an flächigen aktiven Schichtkomplexen, welche von einer Pouch-Folie umschlossen ist. Die Erfindung betrifft ferner ein Verfahren zur Herstellung einer solchen Batteriezelle.

Batteriezellen sind heute üblicherweise in drei verschiedenen Bauformen erhältlich: Prismatische Zellen weisen einen starren Rahmen bzw. ein Gehäuse auf, innerhalb dessen die einzelnen Anoden- und Kathodenschichten angeordnet sind. Die Schichten sind hierbei jeweils mit einem entsprechenden Anoden- bzw. Kathodenanschluss verbunden, welche in das Gehäuse eingefasst sind. In zylindrischen Zellen sind Stapel von Anoden- und Kathodenschichten ineinander aufgewickelt, wobei die elektrische Kontaktierung für die Anoden- bzw. Kathodenschichten entlang der Zylinderachse bzw. an der Außenseite des Zylinders erfolgt. In sog. Pouch-Zellen sind die Anoden- und Kathodenschichten flächig aufeinander gestapelt, und zum Schutz vor der Umgebung von einer biegsamen Folie umschlossen, aus welcher lediglich zwei Leiterbahnen der Anoden bzw. Kathoden herausragen.

Die unterschiedlichen Bauformen haben jeweils ihre eigenen Vor- und Nachteile, und sind entsprechend der Anforderungen des Einsatzgebietes auszuwählen. So bietet der Rahmen einer prismatischen Zelle mechanische Stabilität nicht nur der Zelle, sondern ermöglicht auch die Verwendung stabiler elektrischer Anschlüsse, wohingegen die Bauweise vorhandenen Platz nicht optimal kompakt nutzt. Überdies kann die Herstellung des Gehäuses (etwa durch Verschweißen von Aluminium) aufwändig sein, was zu höheren Kosten (pro kWh) führt. Zylindrische Zellen können durch feste Wicklung zu einer hohen mechanischen Stabilität gelangen, jedoch ist auch hier die räumliche Ausnutzung noch nicht optimal, und zudem die Kontaktierung aufwändig (insbesondere bei hexagonaler Anordnung). Pouch-Zellen hingegen können durch einfaches Siegeln der Folie günstig hergestellt werden, und weisen zudem eine hohe Kapazität pro Volumen auf. Jedoch ist nur eine vergleichsweise geringe mechanischen Stabilität gegeben (im Vgl. zum Gehäuse prismatischer Zellen bzw. zur straffen zylindrische Wicklung), und auch die Leiterbahnen zur Kontaktierung sind anfällig für Beschädigungen, was die Anforderungen an einen Weiterverarbeitungsprozess erhöht.

Überdies erlaubt ein starres Gehäuse eine bessere thermische Anbindung an die Umgebung und somit eine bessere Abfuhr entstehender Wärme, was sich positiv auf die Lebensdauer der prismatischen Zellen auswirkt, wohingegen die Wärmeabfuhr bei zylindrischen Zellen infolge der Wicklung stark eingeschränkt ist, und auch Pouch-Zellen infolge der fehlenden mechanischen Stabilität nicht einfach in Kontakt mit Wärmesenken installiert werden können. Durch die geringe mechanische Stabilität sind Pouch-Zellen jedoch gerade bei starkem Erwärmen für ein "Aufblähen" (und somit für einen Verlust der strukturellen Integrität) besonders anfällig.

Der Erfindung liegt daher die Aufgabe zugrunde, eine Batteriezelle anzugeben, welche möglichst einfach und sicher kontaktiert werden kann, und welche ferner die Vorteile der o.g. Batteriezellen weitestgehend kombiniert, und dabei die jeweiligen Nachteile möglichst umgeht. Der Erfindung liegt weiter die Aufgabe zugrunde, ein Verfahren zur Herstellung einer derartigen Batteriezelle anzugeben.

Die erstgenannte Aufgabe wird erfindungsgemäß gelöst durch eine Batteriezelle mit einer Anordnung an flächigen aktiven Schichtkomplexen, wobei jeder Schichtkomplex eine Anodenschicht, eine Separatorschicht und eine Kathodenschicht aufweist, und einer Rahmenanordnung, die ein starres Rahmenelement aufweist, welches wenigstens eine erste Stirnseite der besagten Anordnung an aktiven Schichtkomplexen wenigstens teilweise überdeckt, und die weiter wenigstens ein starres Terminalelement aufweist, welches bei der ersten Stirnseite außenseitig am Rahmenelement befestigt ist, und welches eine außenseitige Hauptfläche aus einem elektrisch isolierenden Material aufweist, in die wenigstens ein flächenförmiger Anodenanschluss und/oder ein flächenförmiger Kathodenanschluss flächig eingefasst ist. Weiter umfasst die Batteriezelle eine Pouch-Folie aus einem biegsamen Material, welche am Terminalelement unter Umschluss der Anordnung an aktiven Schichtkomplexen und der Rahmenanordnung fluiddicht derart befestigt ist, dass die Anordnung an aktiven Schichtkomplexen durch die Pouch-Folie vor der Umwelt versiegelt ist, und die besagten Anschlüsse des Terminalelements bzw. des jeweiligen Terminalelements von außen frei zugänglich bleiben, wobei eine elektrische Kontaktierung wenigstens einer der Anodenschichten durch eine erste Rahmenöffnung bei der ersten Stirnseite durchgeführt und mit dem Anodenanschluss elektrisch verbunden ist, und/oder wobei eine elektrische Kontaktierung wenigstens einer der Kathodenschichten durch eine zweite Rahmenöffnung bei der ersten Stirnseite durchgeführt und mit dem Kathodenanschluss elektrisch verbunden ist. Vorteilhafte und teils für sich gesehen erfinderische Ausgestaltungen sind Gegenstand der Unteransprüche und der nachfolgenden Beschreibung.

Die zweitgenannte Aufgabe wird erfindungsgemäß gelöst durch ein Verfahren zur Herstellung einer Batteriezelle, wobei eine Anordnung an flächigen, aktiven Schichtkomplexen bereitgestellt wird, welche jeweils eine Anodenschicht, eine Separatorschicht und eine Kathodenschicht aufweisen, wobei ein starres Rahmenelement bezüglich der besagten Anordnung derart positioniert wird, dass es wenigstens eine erste Stirnseite der Anordnung wenigstens teilweise überdeckt, wobei eine elektrische Kontaktierung wenigstens einer der Anodenschichten durch eine erste Rahmenöffnung des Rahmenelements bei der ersten Stirnseite durchgeführt wird, und eine elektrische Kontaktierung wenigstens einer der Kathodenschichten durch die erste Rahmenöffnung oder durch eine zweite Rahmenöffnung des Rahmenelements bei der ersten Stirnseite durchgeführt wird, und wobei die besagte elektrische Kontaktierung wenigstens einer der Anodenschichten mit einem flächenförmigen Anodenanschluss elektrisch verbunden wird, welcher in eine isolierende Hauptfläche eines starren Terminalelements flächig eingefasst ist, und die elektrische Kontaktierung wenigstens einer der Kathodenschichten mit einem flächenförmigen Kathodenanschluss elektrisch verbunden wird, welcher in besagte Hauptfläche des Terminalelements oder in eine isolierende Hauptfläche eines weiteren starren Terminalelements flächig eingefasst ist.

Verfahrensgemäß ist dabei weiter vorgesehen, dass das Terminalelement bzw. die Terminalelemente bei der ersten Stirnseite außenseitig am Rahmenelement befestigt werden, und die besagte Anordnung an aktiven Schichtkomplexen, das Rahmenelement und das Terminalelement bzw. die Terminalelemente derart von einer Pouch-Folie aus einem biegsamen Material umschlossen werden, dass die Anordnung an aktiven Schichtkomplexen durch die Pouch-Folie vor der Umwelt versiegelt ist, und der besagte jeweilige Anschluss bzw. die besagten Anschlüsse des Terminalelements von außen frei zugänglich bleiben.

Die erfindungsgemäße Batteriezelle teilt die Vorzüge des erfindungsgemäßen Verfahrens. Die für die Batteriezelle und für ihre Weiterbildungen angegebenen Vorteile können dabei sinngemäß, mutatis mutandis, auf das Verfahren übertragen werden.

Die Anordnung umfasst hierbei eine Anzahl, bevorzugt eine Mehrzahl an den besagten aktiven Schichtkomplexen, wobei jeder Schichtkomplex für sich die funktionalen Elemente einer Anodenschicht und einer Kathodenschicht sowie bevorzugt noch eine dazwischen angeordnete Separatorschicht aufweist. Die Anordnung kann hierbei insbesondere durch einen Stapel oder eine Wickelung an Schichtkomplexen, also an Anoden- und Kathodenschichten (sowie ggf. Separatorschichten) gegeben sein. Der besagte Stapel hat bevorzugt die Form eines (bevorzugt flachen) Quaders. Die Anodenschichten sind hierbei bspw. durch Kupfer gegeben, welches mit Graphit beschichtet ist, während die Kathodenschichten aus Aluminium mit NMC- oder LFP-Beschichtung gegeben sind, und die Separatorschichten aus einer keramikbeschichteten Kunststofffolie.

Hierbei und im Folgenden soll der Begriff "starr" insbesondere bedeuten, dass der betreffende Körper als solcher keine nennenswerte mechanische Verformbarkeit aufweist, sondern gegenüber den zu erwartenden Belastungen in seiner Form stabil ist, wobei vereinzelt (dünne) federelastische Laschen oder Nasen etc. am Körper ausgebildet sein können.

Das Rahmenelement kann insofern aus einem mechanisch stabilen Kunststoff oder auch aus einem Metall gefertigt sein. Das Rahmenelement weist wenigstens ein flächiges erstes Seitenelement auf, welches an der ersten Stirnseite der Anordnung der aktiven Schichtkomplexe zu positionieren ist. Das Rahmenelement kann in der Batteriezelle bzgl. der besagten Anordnung durch die Spannung der Pouch-Folie in Position gehalten werden, und/oder die Anordnung bzw. den Stapel an aktiven Schichtkomplexen kann noch an weiteren Stirnseiten vom Rahmenelement umfasst sein. Ferner kann das Rahmenelement auch entlang der Hauptfläche der Anordnung (also parallel zum Stapel) verlaufen. Besteht das Rahmenelement nur aus dem ersten Seitenelement, so ist beim Herstellungsprozess die Anordnung der aktiven Schichtkomplexe bezüglich des Rahmenelements gesondert in Position zu halten (etwa über entsprechende Greifer o.ä.), bis die Pouch-Folie appliziert ist. Im besagten ersten Seitenelement sind die erste und ggf. die zweite Rahmenöffnung zur Durchführung der elektrischen Kontaktierungen der Anoden- bzw. Kathodenschichten eingebracht.

Die elektrische Verbindung mit dem im isolierenden Material des Terminalelements eingefassten Anodenanschluss kann hierbei derart erfolgen, dass einzelne Anodenschichten jeweils an einem Flächenende eine hinreichend dünne Leiterbahn aufweisen (welche bspw. durch ein unbeschichtetes Substrat der Anodenschicht gebildet sein kann), und die zusammen durch die erste Rahmenöffnung geführt und am Terminalelement mit einem dortigen innenseitigen Stromsammler (o.ä.) kontaktiert sind. Gruppen einzelner Anodenschichten (oder alle Anodenschichten) können jedoch auch über ihre Leiterbahnen miteinander verbunden sein, sodass nur die Leiterbahn einer Anodenschicht aus der besagten Gruppe mit dem Stromsammler am Terminalelement verbunden ist, und die Anodenschichten der Gruppe somit parallel zueinander geschaltet sind. Der Stromsammler ist dann mit dem Anodenanschluss verbunden. Hierfür ist insbesondere ein elektrischer Kontakt vom Stromsammler an der Innenseite des Terminalelements (welche der Stirnseite der Anordnung an aktiven Schichtkomplexen zugewandt ist) durch das starre, isolierende Material des Terminalelements durchgeführt, und mit dem an der Außenseite angeordneten flächenförmigen Anodenanschluss verbunden. Die gesamte Anordnung aus Stromsammler, Kontakt und Anodenanschluss kann hierbei insbesondere ein im Wesentlichen H-förmiges Profil aufweisen, wobei die langen Schenkel den Stromsammler bzw. den (außenseitigen) Anodenanschluss bilden. Vergleichbares gilt jeweils für die Kathodenschichten bzgl. des Kathodenanschlusses.

Unter einem flächenförmigen Anodenanschluss ist hierbei insbesondere ein Anschluss mit einer insbesondere starren Platte o.ä. zur Kontaktierung von außen umfasst, welche ggf. leicht über die Kontur des Terminalelements an deren Hauptfläche protrudieren kann, wobei das isolierende Material der Hauptfläche des Terminalelements ggf. im Bereich der protrudierenden Platte noch eine umlaufende Fassung o.ä. ausbilden kann. Vergleichbares gilt jeweils für den Kathodenanschluss. Das Terminalelement umfasst hierbei bevorzugt beide besagten Anschlüsse. Alternativ dazu kann das Terminalelement auch nur einen der beiden besagten Anschlüsse umfassen, wobei die Batteriezelle ein weiteres Terminalelement mit dem jeweils anderen Anschluss (welches insbesondere ansonsten baugleich zum bereits genannten Terminalelement ist) aufweist. Das weitere Terminalelement wird in diesem Fall ebenfalls von der Pouch-Folie umschlossen. Das Terminalelement weist somit außenseitig, also vom Rahmenelement weg gerichtet, wenigstens einen flächigen Bereich aus dem isolierenden Material auf, welcher die besagte Hauptfläche bildet. In dieser Hauptfläche sind die flächenförmigen und bevorzugt starren Anschlüsse flächig eingefasst, also entlang des Flächenverlaufs der Hauptfläche (also insbesondere parallel oder im Wesentlichen parallel zu dieser). Weiter ist an dieser Hauptfläche bevorzugt die Pouch-Folie unter Versiegelung der aktiven Schichtkomplexe befestigt. Insbesondere kann das Terminalelement im Wesentlichen gebildet sein aus einer starren, isolierenden Fassung, welche die Hauptfläche ausbildet, und welche am Rahmenelement zu befestigen ist, sowie weiter aus dem besagten außenseitigen Anoden- bzw. Kathodenanschluss nebst entsprechenden innenseitigen Stromsammlern o.ä. und Kontaktierungen der Stromsammlern zu den genannten Anschlüssen.

Die besagte elektrische Verbindung kann hierbei insbesondere durch ein Verschweißen der Leiterbahnen der Anoden- bzw. Kathodenschicht(en) mit dem zugehörigen Stromsammler (oder direkt mit der Fassung des zugehörigen Anschlusses im Terminalelement) erfolgen.

Als vorteilhaft erweist es sich hierbei für die Herstellung, wenn nach dem Durchführen der Leiterbahnen (oder sonstigen elektrischen Kontaktierungen) durch die betreffende Rahmenöffnung das Terminalelement zur Befestigung der Leiterbahnen zunächst senkrecht zur ersten Stirnseite positioniert wird, sodass die Leiterbahnen direkt senkrecht auf den zugehörigen Schweißpunkt (Stromsammler bzw. Anschluss-Fassung) am Terminalelement geschweißt werden können. Anschließend wird das Terminalelement um 90° gekippt, sodass es parallel zur ersten Seitenfläche des Rahmenelements steht, und wird dann in dieser Lage am Rahmenelement befestigt.

Die Befestigung des Terminalelements am Rahmenelement kann hierbei insbesondere formschlüssig erfolgen, etwa mittels wenigstens eines Schnapphakens, oder auch mittels sonstiger Befestigungselemente wie z.B. Schrauben und/oder Nieten. Bevorzugt ist am Rahmenelement außenseitig eine Anzahl an Befestigungselementen, insbesondere an Haltenasen angebracht, und am Terminalelement eine entsprechende Anzahl an Befestigungselementen, insbesondere Schnapphaken, wobei besonders bevorzugt das Terminalelement am Rahmenelement durch ein Hintergreifen der Anzahl an Haltenasen durch den bzw. die entsprechenden Schnapphaken befestigt ist. Hierdurch kann auf weitere Befestigungselemente der o.g. Art verzichtet werden, wobei durch das Hintergreifen durch wenigstens einen, bevorzugt mindestens zwei federelastische Schnapphaken, welche aus dem Terminalelement ausgeformt sind, ein besonders stabiler Formschluss erzielt werden kann. Insbesondere kann für den Fall, dass das Rahmenelement aus Metall ist, im Terminalelement eine bspw. ringförmige Isolierung (um die Anschlüsse herum) eingearbeitet sein, bzw. eine solche Isolierung durch besagten Formschluss befestigt sein.

Nach der Befestigung des Terminalelements am Rahmenelement werden die Rahmenanordnung (welche Terminalelement und Rahmenelement umfasst) und die Anordnung (bzw. der Stapel) an aktiven Schichtkomplexen von der biegsamen Pouch-Folie umschlossen, sodass diese am Terminalelement fluiddicht abschließt, und dabei nur noch die beiden Anschlüsse zugänglich bleiben (etwa durch eine entsprechende Aussparung für beide Anschlüsse oder durch Aussparungen für jeden der Anschlüsse in der Pouch-Folie, oder durch ein nicht aneinander bündiges Anschweißen der Kanten zweier Pouch-Folien am Terminalelement, sodass die Anschlüsse frei bleiben (also insbesondere durch die Pouch-Folie nicht mit umschlossen sind). Die Pouch-Folie umfasst bevorzugt eine Lage eines Metalls wie z.B. Aluminium, welche an beiden Flächenseiten jeweils von einer Lage Kunststoff bedeckt ist.

Die Pouch-Folie ist bevorzugt einstückig ausgestaltet, sodass der Kathodenanschluss und der Anodenanschluss durch wenigstens eine entsprechende Aussparung im Bereich des Terminalelements zugänglich bleibt, und an den verbleibenden Stirnseiten der besagten Anordnung die Pouch-Folie durch ein fluiddichtes Zusammenfügen freier Enden verschlossen wird, bspw. durch ein Verschweißen. Die Pouch-Folie wird hierfür als eine U-förmige Tasche über die besagte Anordnung an aktiven Schichtkomplexen, das Rahmenelement und das Terminalelement geschoben. Durch die einstückige Ausgestaltung ist die Batteriezelle besonders sicher versiegelt. Die Pouch-Folie kann jedoch auch aus mehreren mit einander verschweißten Folienstücken gebildet sein.

Die vorgeschlagene Batteriezelle erlaubt für eine Pouch-Zelle eine mechanisch stabile elektrische Kontaktierung über die beiden in das Terminalelement eingefassten Anschlüsse. Auf zusätzliche Elemente, wie sie etwa bei einer klassischen Pouch-Zelle für die Leiterbahnen zur Stabilisierung erforderlich wären, kann hier verzichtet werden. Überdies erhöht die Rahmenanordnung die mechanische Stabilität und auch die thermische Anbindung der Batteriezelle an seine Umgebung. Somit kann auch auf einen externen Rahmen oder ein äußeres Gehäuse (wie das einer prismatischen Zelle) verzichtet werden, wodurch der Platzvorteil der Pouch-Zelle gegenüber anderen Bauformen weiter erhalten bleibt.

Für das Rahmenelement kommen dabei unterschiedliche Geometrien in Frage, deren konkrete Auswahl sich insbesondere nach der Anwendung der Batteriezelle und der hieraus resultierenden Anforderungen an die mechanische Stabilität und die thermische Anbindung richten können.

In einer Ausgestaltung kann das Rahmenelement die Anordnung an aktiven Schichtkomplexen all ihren Stirnseiten umgeben. Das Rahmenelement fasst somit die besagte Anordnung ein, und liefert dadurch zusätzliche seitliche Stabilität.

Zusätzlich oder alternativ kann in einer weiteren Ausgestaltung das Rahmenelement ein flächiges Bodenelement und wenigstens ein hierzu senkrechtes erste Seitenelement aufweisen, an welchem das Terminalelement befestigt ist. Das Bodenelement liefert dann auch zusätzliche Flächenstabilität. Insbesondere kann dabei das Rahmenelement die Anordnung an aktiven Schichtkomplexen zusätzlich an aktiven Schichtkomplexen all ihren Stirnseiten umgeben, sodass das Rahmenelement in diesem Fall eine Wannenform oder eine doppelte Wannenform (mit H-förmigem Querschnitt) aufweist. Das Rahmenelement kann jedoch auch nur ein Bodenelement und das erste Seitenelement aufweisen (L-förmiger oder gekippt T-förmiger Querschnitt), oder zusätzlich noch ein zweites Seitenelement gegenüber dem ersten Seitenelement (H-förmiger Querschnitt, ohne weitere Seitenflächen).

Insbesondere kann das erste Seitenelement auch aus einer ersten Einzelplatte und einer von dieser getrennten zweiten Einzelplatte gebildet werden, wobei der Kathodenanschluss in der ersten Einzelplatte eingefasst ist, und der Anodenanschluss in der zweiten Einzelplatte.

Nachfolgend wird ein Ausführungsbeispiel der Erfindung anhand von Zeichnungen näher erläutert. Hierbei zeigen jeweils schematisch:
- Fig. 1: anhand einer Folge an Querschnittdarstellungen ein Verfahren zur Herstellung einer Pouch-Batteriezelle mit einem stabilen Terminalelement zur elektrischen Kontaktierung, und
- Fig. 2a-8a: in jeweiligen Querschnittdarstellungen einzelne Ausgestaltungen eines Rahmenelements in der Pouch-Batteriezelle nach Fig. 1.
- Fig. 2b-8b: in jeweiligen Draufsichten die Ausgestaltungen des Rahmenelements nach Fig. 2a bis 8a, und
- Fig. 9: in einer Frontalansicht eine alternative Ausgestaltung eines ersten Seitenelements des Rahmenelements der Batteriezelle nach Fig. 1.

Einander entsprechende Teile und Größen sind in allen Figuren jeweils mit denselben Bezugszeichen versehen.

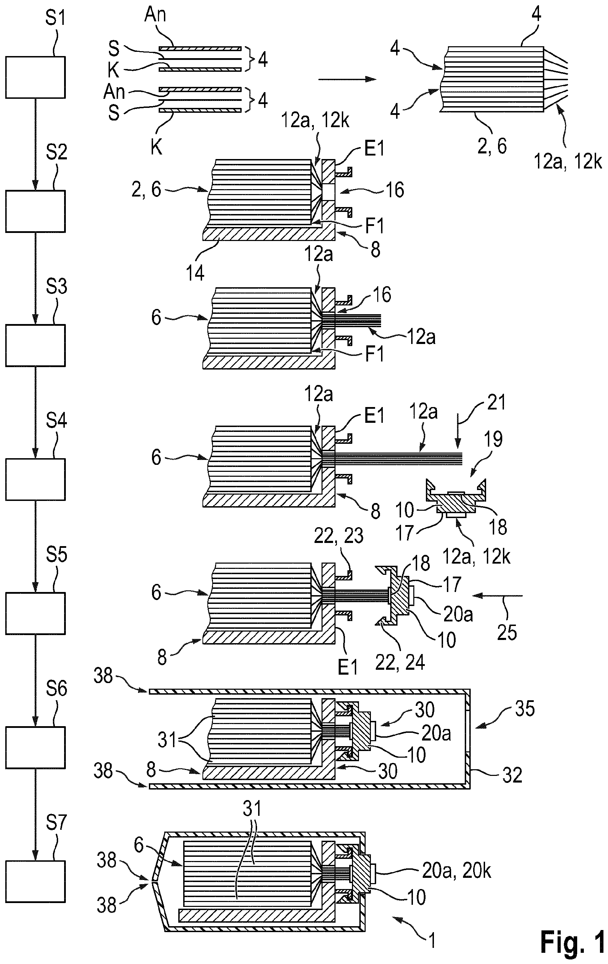

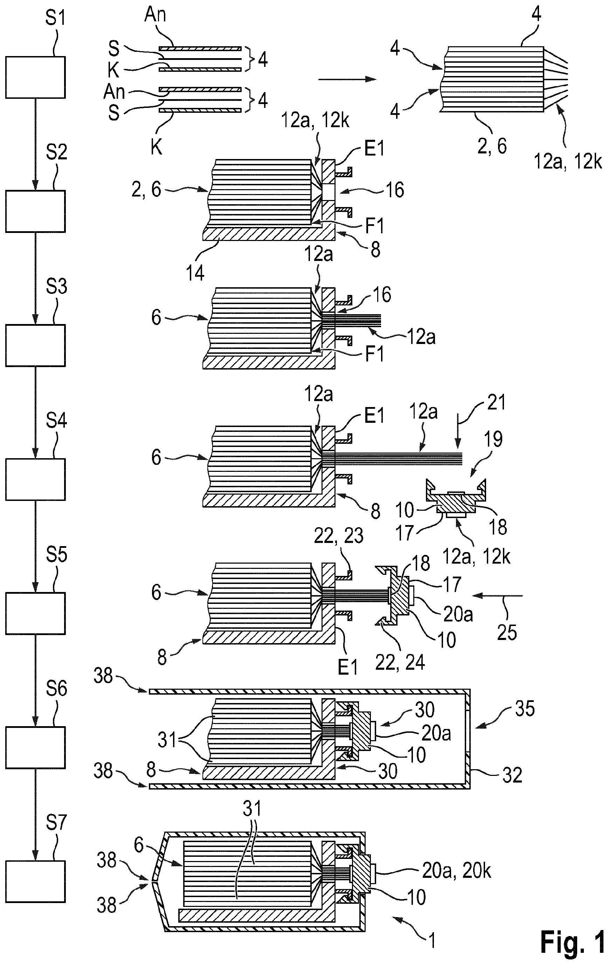

In Figur 1 ist schematisch ein Verfahren zur Herstellung einer Batteriezelle 1 anhand einer Abfolge an Querschnittdarstellungen der besagten Batteriezelle 1 während der Fertigung gezeigt.

In einem ersten Schritt S1 wird eine Anordnung 2 an einzelnen aktiven Schichtkomplexen 4 bereitgestellt, indem zunächst für jeden aktiven Schichtkomplex 4 eine Anodenschicht An, eine Separatorschicht S und eine Kathodenschicht K aufeinandergestapelt werden, und die einzelnen aktiven Schichtkomplexe 4 ebenfalls zu einem Stapel 6 gestapelt werden, welcher die Anordnung 2 bildet. Diese umfasst somit eine Mehrzahl an Anodenschichten An, eine Mehrzahl an Separatorschichten S und eine Mehrzahl an Kathodenschichten K. Die Anodenschichten An können hierbei jeweils gegeben sein durch eine Substratfolie aus Kupfer, auf welche eine Graphitbeschichtung aufgetragen ist, , die Kathodenschichten durch eine Substratfolie aus Aluminium, welche mit NMC oder LFP beschichtet ist. Die Separatorschichten S können insbesondere jeweils durch eine keramikbeschichtete Kunststofffolie gegeben sein. Der Stapel 6 weist hierbei eine im Wesentlichen quaderförmige Geometrie auf, wobei an einer ersten Stirnseite F1 einzelne Leiterbahnen 12a der Anodenschichten An und Leiterbahnen 12k der Kathodenschichten K aus dem Stapel 6 geführt sind. Die Leiterbahnen 12a, 12k können hierbei direkt aus dem jeweiligen beschichteten Substrat ausgebildet werden.

In einem zweiten Schritt S2 wird ein starres, also insbesondere mechanisch stabiles (bzgl. der zu erwartbaren mech. Belastungen) Rahmenelement 8 bereitgestellt, und bezüglich des Stapels 6 derart positioniert, dass ein erstes Seitenelement E1 des Rahmenelements 8 die erste Stirnseite F1 des Stapels 6 weitgehend überdeckt. Das Rahmenelement 8 weist hierbei weiter ein Bodenelement 14 auf, welches senkrecht zum ersten Seitenelement E1 steht, und somit parallel zu den einzelnen Schichten An, S, K der aktiven Schichtkomplexe 4 verläuft. Das Rahmenelement 8 liegt nun also wie eine Art Wanne bzw. Wannenkante unter und an der ersten Stirnseite F1 seitlich um den Stapel 6.

Im Rahmenelement 8 ist, im ersten Seitenelement E1, eine erste Rahmenöffnung 16 eingebracht (eingezeichnet über eine Durchbrechung der Schraffur des Rahmenelements 8), wobei weiter hinter der Bildebene noch eine zweite Rahmenöffnung (nicht eingezeichnet) angeordnet sein kann. In einem dritten Schritt S3 werden nun die einzelnen Leiterbahnen 12a der Anodenschichten An des Stapels 6 an der ersten Stirnseite F1 gesammelt, und durch die erste Rahmenöffnung 16 geführt, sodass diese an der Außenseite des ersten Seitenelements E1 zugänglich werden. Die Leiterbahnen 12k der Kathodenschichten K des Stapels 6 werden ebenfalls gesammelt und durch besagte zweite Rahmenöffnung geführt.

In einem vierten Schritt S4 wird ein starres (also insbesondere mechanisch stabiles) Terminalelement 10, welches aus einem elektrisch isolierenden Material gefertigt ist, außerhalb des Rahmenelements 8 im 90°-Winkel zum ersten Seitenelement E1 derart positioniert, dass Stromsammler 18, welche in eine innere Seitenfläche 19 des Terminalelements 10 eingefasst sind, zum einen direkt zugänglich sind, und zum anderen in unmittelbarer Nähe zu den Leiterbahnen 12a bzw. 12k angeordnet sind. In das Terminalelement 10 sind dabei in eine außenseitige Hauptfläche 17, welche der inneren Seitenfläche 19 gegenüberliegt, ein Anodenanschluss 20a und (hinter der Bildebene, also in einem verschobenen Querschnitt) ein Kathodenanschluss 20k flächig (d.h. entlang der Hauptfläche 17) eingefasst, wobei der Anoden- bzw. Kathodenanschluss 20k jeweils mit einem Stromsammler 18 mittels einer in Figur 1 nicht dargestellten Durchkontaktierung elektrisch verbunden ist. Die Leiterbahnen 12a der Anodenschichten An werden nun an den Stromsammler 18 des Anodenanschlusses 20a geschweißt, wobei ein Schweißwerkzeug hierfür aus senkrechter Richtung 21 (bzgl. der Anoden- und Kathodenschichten An, K) an die innere Seitenfläche 18 des Terminalelements 10 herangeführt werden kann. Entsprechend werden die Leiterbahnen 12k der Kathodenschichten K an den Stromsammler 18 des Kathodenanschlusses 20k geschweißt.

Nach dem besagten Verschweißen der Leiterbahnen 12a, 12k der Anoden- bzw. Kathodenschichten An, K sind somit die einzelnen Anoden- bzw. Kathodenschichten An, K der Anordnung 2 (Stapel 6) an aktiven Schichtkomplexen 4 jeweils mit dem zugehörigen Anoden- bzw. Kathodenanschluss 20a, 20k des Terminalelements 10 elektrisch verbunden. Nun wird in einem fünften Schritt S5 das wie beschrieben kontaktierte Terminalelement 10 um 90° gekippt, so dass die innere Seitenfläche 19, an welcher die Leiterbahnen 12a, 12k an den jeweiligen Stromsammlern 18 kontaktiert sind, parallel zum ersten Seitenelement E1 steht, und an diesem befestigt.

Zu diesem Zweck weist das Rahmenelement 8 im Bereich der ersten Rahmenöffnung 18 nach außen (bzgl. des vom Rahmenelement 8 wenigstens teilweise umfassten Stapels 6) Befestigungselemente 22 auf, welche vorliegend durch zwei entgegengesetzt ausgerichtete Haltenasen 23 gegeben sind. Das Terminalelement 10 weist im Bereich um die Stromsammler 18 ebenfalls Befestigungselemente auf, welche vorliegend durch Schnapphaken 24 gegeben sind, welche an der inneren Seitenfläche 19 ausgeformt sind, und welche jeweils den Haltenasen 23 entsprechen. Durch einen mechanischen Druck in einer Richtung 25 parallel zu den Anoden- bzw. Kathodenschichten An, K wird das Terminalelement 10 am Rahmenelement 8 befestigt, indem die Schnapphaken 24 des Terminalelements 10 die Haltenasen 23 des Rahmenelements 8 hintergreifen. Durch die Befestigung bilden das Terminalelement 10 und das Rahmenelement 8 eine Rahmenanordnung 30 der späteren Batteriezelle 1.

Nach besagter Befestigung des Terminalelements 10 wird in einem sechsten Schritt S6 das Halbzeug 31 der Batteriezelle, welches aus der Rahmenanordnung 30 und der Anordnung 2 an aktiven Schichtkomplexen 4 gebildet wird, mit einer Pouch-Folie 32 überzogen und durch diese versiegelt. Die Pouch-Folie 32 ist hierbei einstückig ausgestaltet, und wird zum Überziehen als eine U-förmige Tasche für das besagte Halbzeug 31 geformt (z.B. gefaltet), welche über das Halbzeug 31 gestülpt wird. Die Pouch-Folie 32 weist hierbei im später beim Anoden- und Kathodenanschluss 20a, 20k zu positionierenden Bereich entsprechende Aussparungen 35 auf, durch welche hindurch die besagten Anschlüsse An, K weiterhin leicht zugänglich bleiben, und insbesondere mittels eines Steckers o.ä. kontaktiert werden können.

Ist die Pouch-Folie vollständig auf das besagte Halbzeug 31 aufgestülpt, sodass insbesondere der besagte Anoden- bzw. Kathodenanschluss An, K des Terminalelements 10 durch die zugehörigen Aussparungen 35 protrudieren, wird in einem siebten Schritt S7 den Stapel 6 der aktiven Schichtkomplexe 4 durch die Pouch-Folie 32 versiegelt. Hierzu werden die freien Enden 38 der Pouch-Folie 32 um die Rahmenanordnung 30 und den Stapel 6 geschlagen und durch Verschweißen verschlossen. Weiter wird die Pouch-Folie 32 an ihren die Aussparung 35 abgrenzenden Kanten an das Terminalelement 10 geschweißt.

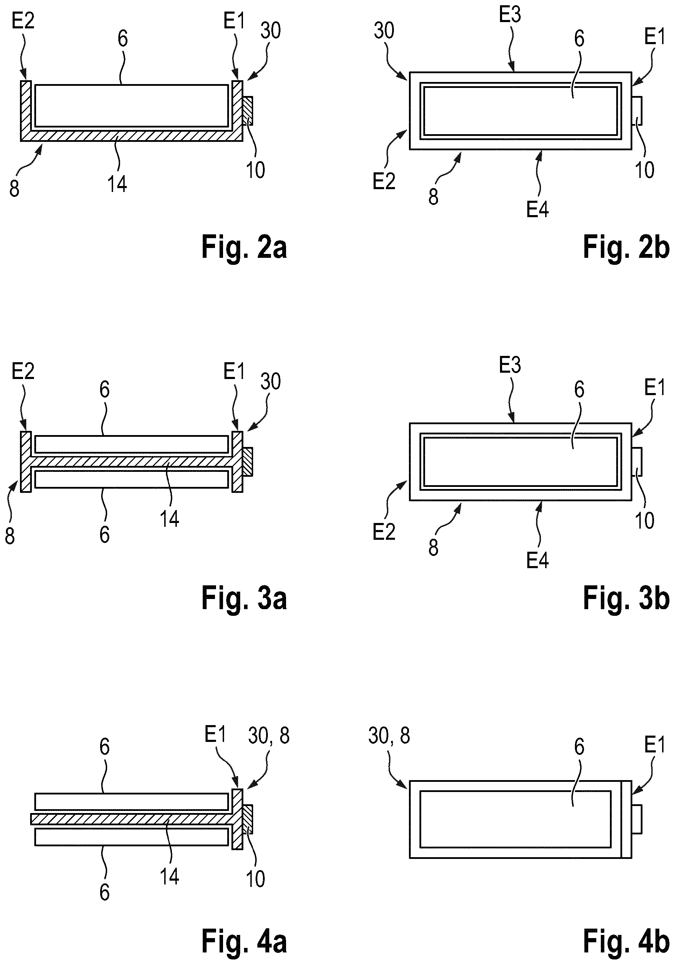

In den Figuren 2a bis sind schematisch jeweils in einer Querschnittdarstellung einzelne Varianten der Rahmenanordnung 30 in der Batteriezelle 1 nach Figur 1 dargestellt, die Figuren 2b bis zeigen die einzelnen Varianten jeweils in einer entsprechenden Draufsicht. Zur Übersichtlichkeit wird hierbei jeweils die Pouch-Folie 32 nicht mit dargestellt.

In Figur 2a und Figur 2b ist dabei jeweils eine erste Variante der Rahmenanordnung 30 in der Batteriezelle 1 nach Figur 1 dargestellt. Das Rahmenelement 8 ist hierbei wannenförmig ausgestaltet, und weist ein Bodenelement 14 auf, an welches senkrecht das erste Seitenelement E1, das hierzu gegenüberliegende zweite Seitenelement E2 sowie weitere Seitenelemente E3, E4 anschließen. Das Terminalelement 10 ist flächig am ersten Seitenelement E1 angebracht. Der Stapel 6 der aktiven Schichtkomplexe 4 ist auf dem Bodenelement 14 positioniert, und wird seitlich von den Seitenelementen E1-E4 umgeben.

In Figur 3a und Figur 3b ist eine zweite Variante der Rahmenanordnung 30 in der Batteriezelle 1 nach Figur 1 dargestellt. Das Rahmenelement 8 dieser Variante umfasst, wie die erste Variante nach Figur 2a, 2b, ein Bodenelement 14 und vier Seitenelemente E1-E4, wobei das Terminalelement 10 auch hier am ersten Seitenelement E1 des Rahmenelements 8 angebracht ist. Jedoch ist bildet nun, wie aus Figur 3a ersichtlich, das Bodenelement 14 mit dem ersten und zweiten Seitenelement E1, E2 einen H-förmigen Querschnitt, d.h., das Bodenelement 14 schließt an die Seitenelemente E1-E4 nicht an einer jeweiligen Kante dieser an, sondern an deren Flächenmitten. Hierfür ist der Stapel 6 an aktiven Schichtkomplexen 4 zweigeteilt, wobei eine erste Hälfte des Stapels 6 auf der Bodenfläche 14 angeordnet ist, und eine zweite Hälfte des Stapels 6 darunter (in der fertigen Batteriezelle wird diese Hälfte des Stapels 6 durch die Pouch-Folie 32 in Position gehalten). Für eine Kontaktierung der Leiterbahnen (nicht dargestellt) beider Hälften des Stapels 6 sind bevorzugt entsprechende zusätzliche Rahmenöffnungen (nicht dargestellt) in das erste Seitenelement E1 einzubringen, sodass für die Kontaktierungen der Anoden- bzw. Kathodenschichten jeder Stapelhälfte eine eigene Rahmenöffnung vorliegt (entweder oberhalb oder unterhalb des Bodenelements 14).

Eine hierzu ähnliche, dritte Variante ist in Figur 4a und Figur 4b dargestellt. Auch in dieser Variante sind zwei Hälften des Stapels 6 jeweils oberhalb bzw. unterhalb des Bodenelements 14 angeordnet. Im Gegensatz zur zweiten Variante nach Figur 3a und Figur 3b sind diese Hälften der Stapel 6 jedoch seitlich nicht vollständig durch Seitenelemente E1-E4 umgeben. Stattdessen weist die Variante nach Figur 4a und Figur 4b lediglich ein erstes Seitenelement E1 auf, an welchem das Terminalelement 10 befestigt ist. Das Rahmenelement 8 dieser Rahmenanordnung 30 der dritten Variante weist somit einen Querschnitt mit der Form eines um 90° gekippten T auf. Auch hier sind für eine Kontaktierung der Leiterbahnen beider Hälften des Stapels 6, wie in der zweiten Variante nach Figur 3a und Figur 3b, bevorzugt entsprechende zusätzliche Rahmenöffnungen (nicht dargestellt) in das erste Seitenelement E1 einzubringen.

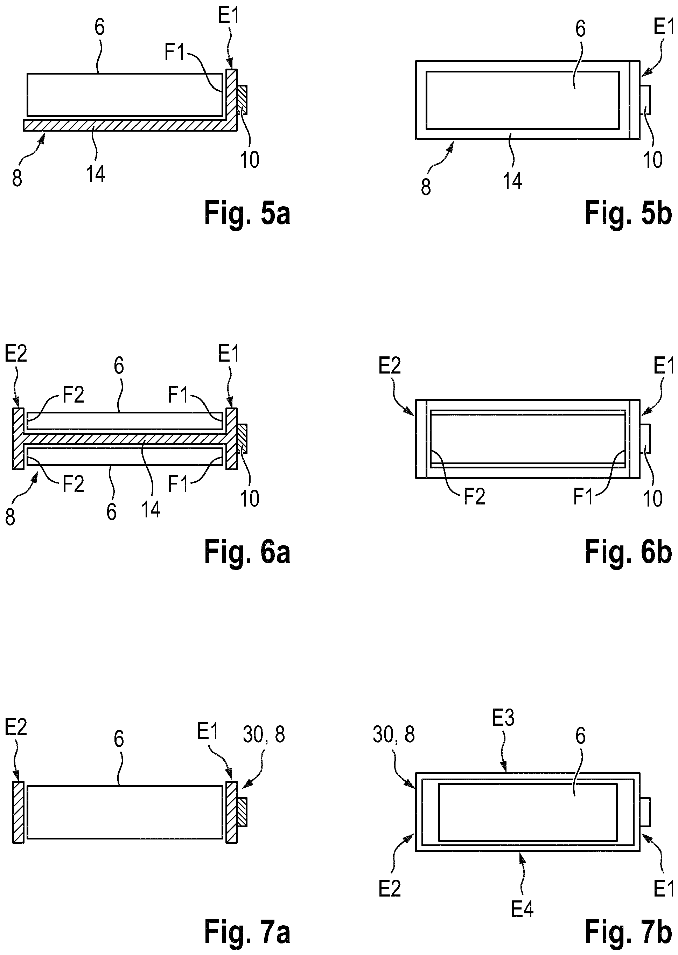

Eine weitere Variante mit nur einem ersten Seitenelement E1 des Rahmenelements 8 ist durch die in Figur 5a und Figur 5b dargestellte vierte Variante gegeben. Diese ist in der Anordnung des Bodenelements 14 relativ zum Stapel 6 an aktiven Schichtkomplexen 4 sowie relativ zum ersten Seitenelement E1 vergleichbar mit der ersten Variante nach Figur 2a und Figur 2b. Der Stapel 6 ist somit lediglich an seiner ersten Stirnseite F1 an das erste Seitenelement E1 des Rahmenelements 8 angeschlagen. Hierbei ergibt sich ein L-förmiger Querschnitt.

In Figur 6a und Figur 6b ist eine Untervariante bzw. Abänderung der zweiten Variante nach Figur 3a und Figur 3b dargestellt. Diese fünften Variante nach Figur 6a bzw. 6b weist ein Bodenelement 14 auf, welches an das erste bzw. zweite Seitenelement E1, E2 an deren Flächenmitten anschließt, woraus sich ein H-förmiger Querschnitt ergibt. Jedoch fehlen in dieser Variante die zusätzlichen Seitenelemente E3, E4, sodass hier die beiden Hälften des Stapels 6 jeweils nicht vollständig durch die Seitenelemente umgeben ist, sondern nur an der ersten Stirnseite F1 und einer dieser gegenüberliegenden zweiten Stirnseite F2.

In Figur 7a und Figur 7b ist eine sechste Variante der Rahmenanordnung 30 bzw. des Rahmenelements 8 dargestellt, welche gänzlich ohne ein Bodenelement gefertigt ist. Das Rahmenelement 8 weist bei dieser sechsten Variante lediglich Seitenelemente E1-E4 auf, welche den Stapel 6 an aktiven Schichtkomplexen 4 seitlich vollständig umgeben.

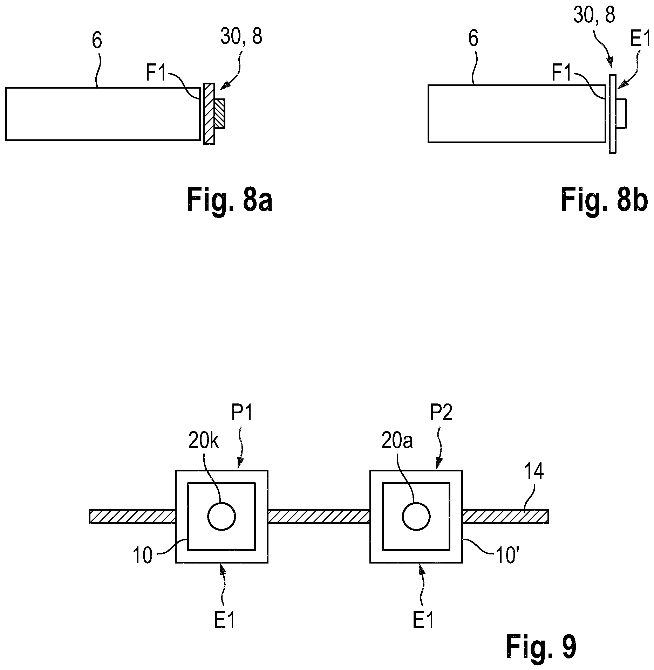

In Figur 8a und Figur 8b ist schließlich eine siebte Variante der Rahmenanordnung 30 dargestellt, in welcher das Rahmenelement 8 lediglich aus dem ersten Seitenelement E1 besteht, welches an den Stapel 6 an dessen erster Stirnseite F1 angeschlagen ist.

In Figur 9 ist in einer Frontalansicht eine mögliche alternative Ausgestaltung für ein erstes Seitenelement E1 der dritten, vierten oder fünften Variante nach Figur 4a, 5a oder 6a (bzw. 4b, 5b oder 6b) dargestellt. Das erste Seitenelement E1 wird in der vorliegenden Ausgestaltung nach Figur 9 aus einer ersten Einzelplatte P1 sowie einer von der ersten Einzelplatte P1 getrennten zweiten Einzelplatte P2 gebildet, welche jeweils senkrecht an das Bodenelement 14 angebracht sind (die vorliegende Darstellung nach Figur 9 entspricht dabei der dritten oder fünften Variante nach Figur 4a oder 6a bzw. 4b oder 6b, ist jedoch auch für die vierte Variante nach Figur 5a bzw. 5b ausführbar). Der Kathodenanschluss 20k ist hierbei in ein Terminalelement 10 eingefasst, welches an der ersten Einzelplatte P1 befestigt ist, der Anodenanschluss 20a in ein weiteres Terminalelement 10`, welches an der zweiten Einzelplatte P2 befestigt ist. In einer weiteren, nicht näher gezeigten Alternative können sowohl die Leiterbahnen 12a für den Anodenanschluss 20a als die Leiterbahnen 12k für den Kathodenanschluss 20k durch entsprechende Rahmenöffnungen in einer gemeinsamen Einzelplatte geführt sein, welche sich jedoch nicht über die volle Breite des Bodenelements 14 erstreckt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Batteriezelle
- 2: Anordnung
- 4: aktiver Schichtkomplex
- 6: Stapel
- 8: Rahmenelement
- 10, 10`: Terminalelement
- 12a/k: Leiterbahnen (der Anode/Kathode)
- 14: Bodenelement
- 16: erste Rahmenöffnung
- 17: (außenseitige) Hauptfläche (des Terminalelements)
- 18: Stromsammler
- 19: innere Seitenfläche (des Terminalelements)
- 20a/k: Anoden-/Kathodenanschluss
- 21: Richtung
- 22: Befestigungselemente
- 23: Haltenasen
- 24: Schnapphaken
- 25: Richtung
- 30: Rahmenanordnung
- 31: Halbzeug (der Batteriezelle)
- 32: Pouch-Folie
- 35: Aussparung
- 38: freies Ende (der Pouch-Folie)
- An: Anodenschicht
- E1/2: erstes/zweites Seitenelement
- E3/4: Seitenelement
- F1/2: erste/zweite Stirnseite
- K: Kathodenschicht
- P1/2: erste/zweite Einzelplatte
- S: Separatorschicht
- S1-S7: erster bis siebter Verfahrensschritt

## Patentansprüche

1. Batteriezelle (1), umfassend
- eine Anordnung (2) an flächigen aktiven Schichtkomplexen (4),
wobei jeder Schichtkomplex (4) eine Anodenschicht (An), eine Separatorschicht (S) und eine Kathodenschicht (K) aufweist,
- eine Rahmenanordnung (30), die
-- ein starres Rahmenelement (8) aufweist, welches wenigstens eine erste Stirnseite (F1) der besagten Anordnung (2) an aktiven Schichtkomplexen (4) wenigstens teilweise überdeckt, und weiter
-- wenigstens ein starres Terminalelement (10, 10')aufweist, welches bei besagter Stirnseite (F1) außenseitig am Rahmenelement (8) befestigt ist, und welches eine außenseitige Hauptfläche (17) aus einem elektrisch isolierenden Material aufweist, in die wenigstens ein flächenförmiger Anodenanschluss (20a) und/oder ein flächenförmiger Kathodenanschluss (20k) flächig eingefasst ist, und
- eine Pouch-Folie (32) aus einem biegsamen Material, welche am Terminalelement (10, 10`) unter Umschluss der Anordnung (2) an aktiven Schichtkomplexen (4) und der Rahmenanordnung (30) fluiddicht derart befestigt ist, dass
-- die Anordnung (2) an aktiven Schichtkomplexen (4) durch die Pouch-Folie (32) vor der Umwelt versiegelt ist, und
-- die besagten Anschlüsse (20a, 20k) des Terminalelements (10) bzw. des jeweiligen Terminalelements (10, 10`) von außen frei zugänglich bleiben,
wobei eine elektrische Kontaktierung (12a) wenigstens einer der Anodenschichten (An) durch eine erste Rahmenöffnung (16) bei der ersten Stirnseite (F1) durchgeführt und mit dem Anodenanschluss (20a) elektrisch verbunden ist, und/oder
wobei eine elektrische Kontaktierung (12k) wenigstens einer der Kathodenschichten (K) durch die erste Rahmenöffnung (16) oder durch eine zweite Rahmenöffnung bei der ersten Stirnseite (F1) durchgeführt und mit dem Kathodenanschluss (20k) elektrisch verbunden ist.

2. Batteriezelle (1) nach Anspruch 1,
wobei am Rahmenelement (8) außenseitig eine Anzahl an Befestigungselementen (22) angebracht ist,
wobei am Terminalelement (10) bzw. jeweiligen Terminalelement (10, 10`) eine entsprechende Anzahl an Befestigungselementen (22) angebracht ist, und
wobei das Terminalelement (10) am Rahmenelement (8) durch Formschluss der jeweiligen Befestigungselemente (22) befestigt ist.

3. Batteriezelle (1) nach Anspruch 1 oder Anspruch 2,
wobei das Rahmenelement (8) die Anordnung (2) an aktiven Schichtkomplexen (4) all ihren Stirnseiten (F1) umgibt.

4. Batteriezelle (1) nach einem der vorhergehenden Ansprüche,
wobei das Rahmenelement (8) ein flächiges Bodenelement (14) und wenigstens ein hierzu senkrechtes erste Seitenelement (E1) aufweist, an welchem das bzw. jedes Terminalelement (10, 10`) befestigt ist.

5. Batteriezelle (1) nach Anspruch 4,
wobei das Rahmenelement (8) weiter wenigstens ein zum Bodenelement (14) senkrechtes zweite Seitenelement (E2) aufweist, welche dem ersten Seitenelement (E1) gegenüberliegt.

6. Batteriezelle (1) nach Anspruch 4 oder Anspruch 5,
wobei das erste Seitenelement (E1) aus einer ersten Einzelplatte (P1) und einer von dieser getrennten zweiten Einzelplatte (P2) gebildet wird, wobei der Kathodenanschluss (20k) in das Terminalelement (10) eingefasst ist, welches an der ersten Einzelplatte (P1) befestigt ist, und der Anodenanschluss (20a) in ein weiteres Terminalelement (10`) eingefasst ist, welches an der zweiten Einzelplatte (P2) befestigt ist.

7. Batteriezelle (1) nach einem der vorhergehenden Ansprüche,
wobei die Pouch-Folie (32) die Anordnung (2) an aktiven Schichtkomplexen (4) und die Rahmenanordnung (30) als einstückige Folie umschließt.

8. Batteriezelle (1) nach Anspruch 7,
wobei die Pouch-Folie (32) im Bereich des bzw. jedes Terminalelements (10, 10`) wenigstens eine Aussparung (35) für den Kathodenanschluss (20k) und/oder für den Anodenanschluss (20a) aufweist, und
wobei an den verbleibenden Stirnseiten der Anordnung (2) die Pouch-Folie (32) durch ein fluiddichtes Zusammenfügen freier Enden (38) verschlossen ist.

9. Verfahren zur Herstellung einer Batteriezelle (1),
- wobei eine Anordnung (2) an flächigen, aktiven Schichtkomplexen (4) bereitgestellt wird,
welche jeweils eine Anodenschicht (An), eine Separatorschicht (S) und eine Kathodenschicht (K) aufweisen,
- wobei ein starres Rahmenelement (8) bezüglich der besagten Anordnung (2) derart positioniert wird, dass es wenigstens eine erste Stirnseite (F1) der Anordnung (2) wenigstens teilweise überdeckt,
- wobei eine elektrische Kontaktierung (12a) wenigstens einer der Anodenschichten (an) durch eine erste Rahmenöffnung (16) des Rahmenelements (8) an besagter Stirnseite (F1) durchgeführt wird, und/oder eine elektrische Kontaktierung (12k) wenigstens einer der Kathodenschichten (K) durch die erste Rahmenöffnung (16) oder durch eine zweite Rahmenöffnung des Rahmenelements (8) bei der ersten Stirnseite (F1) durchgeführt wird,
- wobei die besagte elektrische Kontaktierung (12k) wenigstens einer der Kathodenschichten (K) mit einem flächenförmigen Kathodenanschluss (20k) elektrisch verbunden wird, welcher in einer isolierenden Hauptfläche (17) eines starren Terminalelements (10) flächig eingefasst ist, und die elektrische Kontaktierung (12a) wenigstens einer der Anodenschichten (A) mit einem flächenförmigen Anodenanschluss (20a) elektrisch verbunden wird, welcher in besagter Hauptfläche (17) des Terminalelements (10) oder in einer isolierenden Hauptfläche (17) eines weiteren starren Terminalelements (10') flächig eingefasst ist,
- wobei das besagte Terminalelement (10) bzw. die Terminalelemente (10, 10`) bei der ersten Stirnseite (F1) außenseitig am Rahmenelement (8) befestigt werden,
- wobei die besagte Anordnung (2) an aktiven Schichtkomplexen (4), das Rahmenelement (8) und das Terminalelement (10) bzw. die Terminalelemente (10, 10`) derart von einer Pouch-Folie (32) aus einem biegsamen Material umschlossen werden, dass
-- die Anordnung (2) an aktiven Schichtkomplexen (4) durch die Pouch-Folie (32) vor der Umwelt versiegelt ist, und
-- die besagten Anschlüsse (20a, 20k) des Terminalelements (10) bzw. des jeweiligen Terminalelements (10, 10`) von außen frei zugänglich bleiben.

10. Verfahren nach Anspruch 9,
wobei für den Schritt (S4)des Verbindens der elektrischen Kontaktierungen der Anoden- und Kathodenschichten (An, K) mit dem betreffenden Anoden- bzw. Kathodenanschluss (20a, 20k) des Terminalelements (10) bzw. des jeweiligen Terminalelements (10, 10`) besagtes Terminalelement (10) zunächst senkrecht zur ersten Stirnseite (F1) positioniert wird, und
nach dem Erstellen der elektrischen Verbindung in eine Position parallel zur ersten Stirnseite (F1) gekippt und so am Rahmenelement (8) befestigt wird.

11. Verfahren nach Anspruch 9 oder Anspruch 10,
wobei die Pouch-Folie (32) als eine U-förmige Tasche über die besagte Anordnung (2) an aktiven Schichtkomplexen (4), das Rahmenelement (8) und das bzw. jedes Terminalelement (10, 10`) geschoben wird, sodass der Kathodenanschluss (20k) und der Anodenanschluss (20a) durch wenigstens eine entsprechende Aussparung (35) im Bereich des Terminalelements (10) bzw. des jeweiligen Terminalelements (10, 10`) zugänglich bleibt, und
wobei an den verbleibenden Stirnseiten der besagten Anordnung (2) die Pouch-Folie (32) durch ein fluiddichtes Zusammenfügen freier Enden (38) verschlossen wird.
